# EUROPÄISCHE PATENTSCHRIFT

(11) **EP 2 986 748 B1**
(45) Veröffentlichungstag und Bekanntmachung des Hinweises auf die Patenterteilung: **26.06.2019**
(21) Anmeldenummer: 14725601.0
(22) Anmeldetag: 10.04.2014
(51) Int. Cl.: C22C 13/02, F16C 33/12

(54) **GLEITLAGERLEGIERUNG AUF ZINNBASIS**
TIN-BASED SLIDING BEARING ALLOY
ALLIAGE DE PALIER LISSE À BASE D'ÉTAIN

(30) Priorität: 15.04.2013 DE 102013006388
(43) Veröffentlichungstag der Anmeldung: 24.02.2016
(73) Patentinhaber: Zollern BHW Gleitlager GmbH & CO. KG, 38124 Braunschweig (DE)
(72) Erfinder: GZOVSKYY, Konstyantyn, 38126 Braunschweig (DE); REIMER, Frank, 38173 Sickte (DE); HENTSCHEL, Hans-Jürgen, 38835 Osterwieck (DE); GUST, Edgar, 38302 Wolfenbüttel (DE)
(74) Vertreter: Lins, Edgar
(86) Internationale Anmeldenummer: PCT/DE2014/000187
(87) Internationale Veröffentlichungsnummer: WO 2014/169890

(56) Entgegenhaltungen:
- EP-A2- 2 037 140
- WO-A2-2012/028136
- US-A- 1 355 202
- US-A- 3 925 110
- Elliott, Roy: "Eutectic solidification processing", 1983, Butterworths & Co * page 58 - page 59; figure 2.4 *

## Beschreibung

Gleitlagerlegierungen auf Zinnbasis sind seit Jahrzehnten beispielsweise als Weißmetalle bekannt und weisen als Hauptlegierungselemente Antimon und Kupfer auf, wobei die Legierung durch weitere Elemente ergänzt wird.

Die Gleitlagerlegierung wird dabei regelmäßig auf eine Tragkonstruktion; z. B. aus Stahl, beispielsweise in Form einer Lagerstützschale aufgegossen. Die Gleitlagerlegierung soll eine gute Einbettfähigkeit für Schmutzpartikel und eine gute Anpassungsfähigkeit an die aufeinander gleitenden Elemente, beispielsweise eine drehende Welle, aufweisen. Die Gleitmetalllegierungen auf Zinnbasis weisen diese Eigenschaften auf, sind aber hinsichtlich ihrer Belastbarkeit begrenzt. Da die Anforderungen an die Dauerbelastbarkeit von Gleitlagerlegierungen steigen, sind daher zunehmend höher belastbare Gleitlagerlegierungen, beispielsweise auf Aluminium-Zinn-Basis verwendet worden. Diese Gleitlagerlegierungen weisen jedoch hinsichtlich der Einbettfähigkeit und Anpassbarkeit nicht die vorteilhaften Eigenschaften auf, die die Gleitlagerlegierungen auf Zinnbasis gewähren. Es sind daher zahlreiche Versuche unternommen worden, Gleitlagerlegierungen auf Zinnbasis hinsichtlich der Belastbarkeit, also insbesondere hinsichtlich ihrer Härte und Ermüdungsfestigkeit, zu verbessern.

Durch DE 28 18 099 C2 ist es bekannt, ein Weißmetall auf Zinnbasis, das die Legierungselemente Antimon, Kupfer und Cadmium sowie als Kornfeinungselemente Chrom und Kobalt enthält, zusätzlich mit Bor 0,02 bis 0,08 Gew.-% und Zink mit 0,1 bis 0,2 Gew.-% zu versehen. Durch eine kombinierte Wirkung von Bor und Zink, gemeinsam mit Kobalt und Chrom, wird eine wesentliche Verbesserung der Festigkeitseigenschaft erreicht. Die durch Zink eintretende Verschlechterung der Bindung auf der Stahlstützschale wird durch den Zusatz von Bor wieder aufgehoben.

GB 2,146,354 A offenbart eine Gleitlagerlegierung auf Zinnbasis mit den Haupt-Legierungselementen Antimon und Kupfer, bei der die Erhöhung der Festigkeit durch eine Kornfeinung aufgrund einer Zugabe von Titan mit einem Anteil von 0,005 bis 0,5 Gew.-% erreicht werden soll.

SU 1 560 596 A1 offenbart eine Gleitlagerlegierung auf Zinnbasis die als Hauptlegierungselemente 7 bis 8 Gew.-% Kupfer, 10 bis 12 Gew.-% Antimon und 15 bis 20 % Zink und Zinn als Rest aufweist. Die Legierung weist eine erhöhte Haltbarkeit und Verschleißfestigkeit auf, ist jedoch auf ein Stahlsubstrat nur mittels Lichtbogenspritzen aufbringbar. Würde diese Legierung durch Gießen aufgebracht werden, wäre sie als Gleitlagerlegierung wegen einer viel zu niedrigen Zähigkeit nicht brauchbar.

WO 2012/028136 offenbart ebenfalls eine Gleitlagerlegierung auf Zinnbasis mit den Haupt-Legierungselementen Antimon und Kupfer.

Eine weitere Anforderung an die verwendeten Gleitlagerlegierungen besteht darin, diese von umweltbelastenden Legierungsbestandteilen frei zu halten, um ökologisch verträgliche Gleitlagerlegierungen (Weißmetalllegierungen) zu gewährleisten. Es ist jedoch bisher nicht gelungen, derartige Gleitlagerlegierungen zu erstellten, die höheren Festigkeitsansprüchen genügen. Bei höheren Anforderungen an die Belastbarkeit und an die Verschleißbeständigkeit wird somit häufig weiterhin auf Lagermetalle auf Aluminiumbasis ausgewichen, obwohl beim Einsatz dieser Lagermetalle auf die hervorragenden Notlaufeigenschaften von Lagermetalllegierungen auf Zinnbasis verzichtet werden muss.

Durch WO 2009/108975 A1 ist ein Weißmetall mit 4 bis 30 Gew.-% Antimon und 1 bis 10 Gew.-% Kupfer bekannt. Die Legierung soll dabei ferner ein Element aus der Elementengruppe Kobalt, Mangan, Scandium und Germanium mit einer Gesamtkonzentration zwischen 0,2 und 2,6 Gew.-% sowie wenigstens ein Element aus der Elementengruppe Magnesium, Nickel, Zirkon und Titan mit einer Gesamtkonzentration zwischen 0,05 und 1,7 Gew.-% aufweisen, wobei der Summenanteil von Antimon und Kupfer bei einem zumindestens dem dreifachen Kupfergehalt entsprechenden Antimongehalt höchstens 35 Gew.-% beträgt. Die Gleitlagerlegierung kann einen Zusatz von 0,6 bis 1,8 Gew.-%, vor-zugsweise 0,7 bis 0,9 Gew.-% Zink enthalten. Zink dient durch die Bildung von zusätzlichen Kristallisationskeimen zur Feinung der Kupfer-Zinn- und Zinn-Antimonphasen. Dadurch wird ein Anwachsen dieser Phasen auf eine schädigende Größe verhindert. Die untere Grenze von 0,6 Gew.-% Zink ergibt sich daraus, dass eine geringere Zugabe keine positive Wirkung mehr erzeugt, während sich die obere Grenze daraus ergibt, dass über 1 Gew.-% das Zink nicht mehr im Zinn-Mischkristall gelöst wird und sich zwischen Zinn und Zink eine niedrigschmelzende eutektische Phase mit Tm ca. 200°C ausbildet, die die Warmfestigkeit und auch die Korrosionsbeständigkeit senkt.

Der vorliegenden Erfindung liegt die Aufgabe zugrunde, eine Gleitlagerlegierung auf Zinnbasis zur Verfügung zu stellen, die eine verbesserte Festigkeit aufweist und bis zu einer gewissen Betriebstemperatur die Festigkeit der Gleitlagerlegierung auf Zinnbasis so erhöht, dass auf einen Einsatz von Gleitlagerlegierungen auf AluminiumBasis verzichtet werden kann.
Diese Aufgabe wird erfindungsgemäß gelöst durch die Hauptlegierungselemente
0 bis 25 Gew.-% Antimon
0 bis 20 Gew.-% Kupfer und
2 bis 30 Gew.-% Zink
und wenigstens ein Zusatzlegierungselement, ausgewählt aus einer oder mehrerer der nachstehenden Gruppen
Gruppe I:
   Kobalt, Mangan, Scandium, Germanium und Aluminium mit einem Gesamtanteil von 0,001 bis 2,6 Gew.-%,
Gruppe II:
   Magnesium, Nickel, Zirkon, Titan mit einem Gesamtanteil von 0,005 bis 1,7 Gew.-%,
Gruppe III:
   Wismut, Indium, Cadmium und Blei mit Anteilen von jeweils maximal 5 Gew.-% und einem Gesamtanteil von maximal 8 Gew.-%,
Gruppe IV:
   Lithium, Silber, Cer, Yttrium, Samarium, Gold, Tellur und Kalzium, mit einem Anteil von jeweils bis zu 2,5 Gew.-% und einem Gesamtanteil von bis zu 4 Gew.-%,
Gruppe V:
   Arsen, Niob, Vanadin, Chrom, Wolfram, Lanthan und Erbium, mit einem Anteil von jeweils höchstens 1,0 Gew.-% und einem Gesamtanteil von höchstens 2,25 Gew.-%,
Gruppe VI:
   Phosphor und Bor, jeweils mit einem Anteil von maximal 0,1 Gew.-% und einem Gesamtanteil von maximal 0,2 Gew.-%.

Rest Zinn,
wobei die Legierung eutektisches Gefüge als hauptsächliches Strukturelement aufweist, ein Eutektikum aus den beiden Phasen βSn Mischkristall und αZn Mischkristall gebildet ist und die Legierung aus einem unterkühlten Zustand heraus einen metastabilen Festkörper bildet, in dem aufgrund einer ikosaedrischen Anordnung Cluster mit einer hohen Packungsdichte gebildet sind.

Ein derartiger Anteil von Zink als Hauptlegierungselement ist nach dem bisherigen Kenntnisstand der Fachwelt zu vermeiden gewesen, weil bekanntlich Zinn und Zink ein niedrig schmelzendes eutektisches Gefüge bei einem Zinkanteil von 8,8 Gew.-% ausbilden. Das eutektische Gefüge mit dem niedrigen Schmelzpunkt von ca. 200°C ist als nachteilig bezüglich der Warmfestigkeit und der Korrosionsbeständigkeit angesehen worden. Der Erfindung liegt demgegenüber die Erkenntnis zugrunde, dass eine Gleitlagerlegierung mit einer hohen Härte und Ermüdungsfestigkeit und mit einer geeigneten Elastizität bzw. Plastizität bis zu einer Betriebstemperatur von 198°C dadurch hergestellt werden kann, dass das Hauptstrukturelement ein Zinn-Zink-Eutektikum ist. Während die Fachwelt bisher alles unternommen hat, um die Ausbildung eines eutektischen Gefüges zu verhindern, sieht die vorliegende Erfindung vor, eutektisches Gefüge als hauptsächliches Strukturelement zu verwenden. Das eutektische Gefüge von Zinn und Zink erlaubt aufgrund verschiedener Härtungsmechanismen die Ausbildung ausreichend harter und widerstandsfähiger Gefüge. Bei einer Konzentration von 8,8 Gew.-% Zink im Zinn bildet sich das Eutektikum-e(βSn+αZn). Das Eutektikum besteht somit aus den beiden Phasen βSn-Mischkristall und αZn-Mischkristall. In Mischkristallen gelöste Legierungsatome bewirken die sogenannte Mischkristallhärtung. Auch in der Matrix βSn feindispers eingelagerte Teilchen αZn stellen für die wandernden Versetzungen Hindernisse dar und bewirken eine Teilchenhärtung. Sie bewirken darüber hinaus eine indirekte Verfestigung, weil sie eine verstärkte Versetzungsbildung bei plastischer Verformung bewirken.

Die Legierung mit der eutektischen Zusammensetzung von 8,8 Gew.-% Zink in Zinn hat den niedrigsten Schmelzpunkt aller möglichen Legierungen im Sn-Zn-System. Im eutektischen Punkt fällt die Liquidustemperatur mit der Solidustemperatur zusammen. Eine reine eutektische Legierung hat demnach einen Schmelzpunkt und kein Schmelz- bzw. Erstarrungsintervall. Hieraus resultiert eine Verringerung der Neigung zur Rissbildung, Porosität und zu Seigerungen, sodass bedeutende Verbesserungen der technologischen und mechanischen Eigenschaften der Legierung bewirkt werden.

Es ist bekannt, dass eutektische Legierungen eine besondere Neigung zur starken Unterkühlung aufweisen. Im unterkühlten Zustand bildet sich eine ikosaedrische Nahordnung heraus und es bilden sich Cluster mit einer hohen Packungsdichte. Die ikosaedrische Nahordnung einerseits und der feste Körper andererseits haben deutlich verschiedene Packungen. Die Erhöhung der Packungsdichte bei starker Unterkühlung hemmt die Diffusion der Atome für die Kristallisation und für andere Phasenumwandlungen. Im Fall einer großen Unterkühlung weist die Schmelze einen großen Überschuss an freier Energie auf, den das System für vielfältige Erstarrungswege weit außerhalb des Gleichgewichts in manigfachen metastabilen Phasen nutzen kann. Somit können metastabile Festkörper entstehen, die aus übersättigten Mischphasen, korngefeinten Legierungen, ungeordneten Übergitterstrukturen und/oder metastabilen kristallografischen Phasen bestehen können. Bei Zinkanteilen in der Legierung des Systems Sn-Zn von mehr als 8,8 Gew.-% bildet sich eine Struktur mit der primären αZn-Phase. Die primäre αZn-Phase erhöht die Härte und Festigkeit und die Verschleißfestigkeit der Legierung hat jedoch die Tendenz, die Plastizität zu verringern. Hieraus ergibt sich, dass erfindungsgemäß in einem im Wesentlichen reinen Sn-Zn-System der Anteil an Zn nicht zu hoch werden darf und daher bei 14 % begrenzt ist um die für eine gießbare Gleitlagerlegierung benötigte Elastizität bzw. Plastizität zu erhalten.

Die Festigung der erfindungsgemäßen Zink enthaltenden Legierung erfolgt nicht nur mit der Mischkristallhärtung sondern auch mit der zusätzlichen Matrixhärtung (βSn) durch feindispers eingelagerte Teilchen (αZn), mit der primären αZn-Phase und mit metastabilen Festkörpern. Es bildet sich eine korngefeinte Matrix mit Teilchen (αZn) im Eutektikum-e(βSn+αZn) und mit primär Teilchen (αZn).

Das Zink bildet keine intermetallische Phase mit dem Zinn. Das Zink ist in der Matrix in Form von kompakten Einschlüssen (Teilchen) vorhanden. Das Zink ändert somit die Wechselwirkung des Zinns mit anderen Elementen nicht. Es ist daher ohne weiteres möglich, die üblichen weiteren Hauptlegierungselemente Kupfer und Antimon in den üblichen Anteilen von 2 bis 25 Gew.-% Antimon und 3 bis 20 Gew.-% Kupfer hinzuzufügen.

Ein Vergleich der Mikrostruktur der erfindungsgemäßen Legierung mit herkömmlichen Gleitlagerlegierungen, wie beispielsweise TEGOSTAR der Evonik Goldschmidt GmbH, wie sie beispielsweise von Ecka Granules Germany GmbH vertrieben wird, zeigt, dass die erfindungsgemäße Gleitlagerlegierung Phasen mit einer rundlichen Form und einer korngefeinten Matrix aufweisen, dass also die bei der TEGOSTAR-Legierung auftretenden Lamellen und eckigen Phasen in rundliche Formen geändert sind.

In einer Variante der Erfindung lässt sich eine gießfähige Gleitlagerlegierung auch mit höheren Zinkgehalten bis zu 30 Gew.-% mit den gleichen vorteilhaften Eigenschaften und mit einem eutektischen Gefüge als Hauptstrukturelement herstellen, insbesondere wenn Mittel zur Kornfeinung und zur stabilen Clusterbildung hinzugegeben werden.

Die Zusatzlegierungselemente der oben erwähnten Gruppen I und II führen zur Ausbildung von besonders dichten und stabilen Clustern. Dabei bilden Zink, Kobalt, Nickel, Mangan und Germanium Cluster mit der Koordinationszahl 10, während Scandium, Magnesium, Titan, Zirkon und Aluminium Cluster mit der Koordinationszahl 12 bilden. Diese Zusatzlegierungselemente bewirken eine starke Unterkühlung bei der Kristallisation und führen zu einer verstärkten Änderung der Phase aus Lamellen und eckigen Formen in rundliche Formen. Ferner bildet sich eine korngefeinte Zinnmatrix. Die Zusatzlegierungselemente dieser Gruppen führen daher zu einer bedeutenden Steigerung der Festigkeit, Zähigkeit und Ermüdungsfestigkeit der Zinnbasis-Gleitlagerlegierungen.

Die Elemente der dritten Gruppe, nämlich Wismut, Indium, Cadmium und Blei haben eine große Lösbarkeit in der Zinnmatrix und bilden Mischkristalle. Dadurch wird die Mischkristallhärtung bewirkt. Bei der niedrigen Abkühlungsgeschwindigkeit bildet sich das Eutektikum aus. Die Einzelanteile der Legierungselemente dürfen 5 Gew.-% nicht übersteigen. Der Summenanteil muss mit 8 Gew.-% begrenzt werden.

Die Zusatzlegierungselemente der Gruppe IV, nämlich Lithium, Silber, Cer, Yttrium, Samarium, Gold, Tellur und Calcium bilden mit Zinn das Eutektikum-e(βSn+SnₓM1_{y}), wobei M1 eins der Elemente aus dieser Gruppe ist. Das Eutektikum besteht somit aus zwei Phasen, nämlich βSn-Mischkristall und der inter-metallischen Phase SnₓM1_{y}. In den Mischkristallen gelöste Legierungsatome bewirken die sogenannte Mischkristallhärtung. In der Matrix (βSn) feindispers eingelagerte Teilchen SnₓM1_{y} stellen für die wandernden Versetzungen Hindernisse dar und bewirken eine Teilchenhärtung. Da die Erhöhung des Inhalts des Eutektikums zur Senkung der Plastizität beitragen kann, sollen die Einzelanteile dieser Legierungselemente 2,5 Gew.-% nicht übersteigen. Der Summenanteil muss mit 4 Gew.-% nach oben begrenzt sein.

Die Elemente der Gruppe V, nämlich Arsen, Niob, Vanadium, Chrom, Wolfram, Eisen, Lanthan und Erbium bilden mit Zinn eine peritektische Reaktion oder führen zur Bildung von zusätzlichen Kristallkeimen aus einer SnₓM2_{y}-Phase oder einer M2-Phase, wobei M2 eins der genannten Metalle ist. Die zusätzlichen Kristallisationskeime führen zur Feinung der Matrix (βSn), aber auch der Kupfer-Zinn- und Zinn-Antimon-Phase und der primären Zink-Phase. Da auch hier die Erhöhung der SnₓM2_{y}-Phase oder der M2-Phase zur Senkung der Plastizität führen kann, sollen die Einzelanteile dieser Legierungselemente 1,0 Gew.-% nicht übersteigen. Der Summenanteil muss nach oben mit 2,25 Gew.-% begrenzt werden.

Durch die Elemente P oder B der Gruppe VI werden hauptsächlich zusätzliche Kristallisationskeime und zusätzliche metastabile Phasen gebildet. Die zusätzlichen Kristallisationskeime können die Sn4P3-Phase oder die B-Phase sein. Da die Erhöhung der genannten Phasen zur Senkung der Plastizität beitragen kann, werden die Einzelanteile dieser Legierungselemente nach oben mit 0,1 Gew.-% begrenzt. Der Summenanteil darf 0,2 Gew.-% nicht übersteigen.

Gegenstand der Erfindung ist auch ein Gleitlager mit einer Gleitlagerbeschichtung aus einer erfindungsgemäßen Gleitlagerlegierung.

Die obigen Erläuterungen werden im Folgenden anhand von beigefügten Abbildungen näher erläutert.

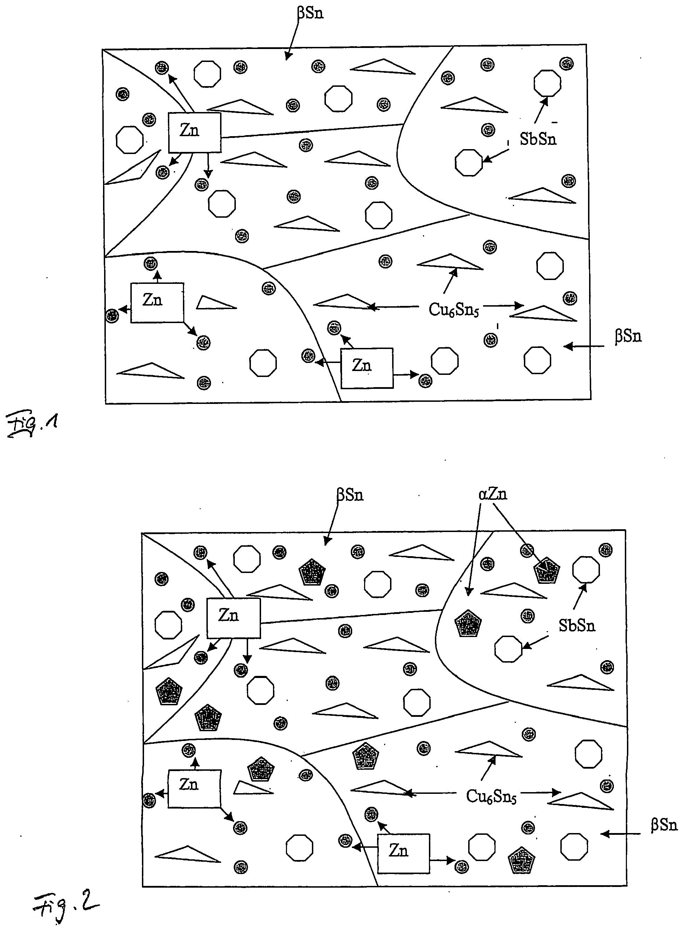

Figur 1 zeigt eine schematische Darstellung eines erfindungsgemäßen Gefüges der Legierung SnSb10Cu4Zn7. Es bilden sich eutektische Gefüge-e(βSn+αZn) mit eingelagerten Gefügeteilchen SbSn, βSn, Cu₆Sn₅ und αZn.
Figur 2 zeigt eine ähnliche schematische Darstellung für die Legierung SnSb12Cu5Zn14 mit den Gefügen αZn+SbSn+Cu₆Sn₅+e(βSn+αZn) mit den Phasen βSn, Cu₆Sn₅, SbSn, αZn.

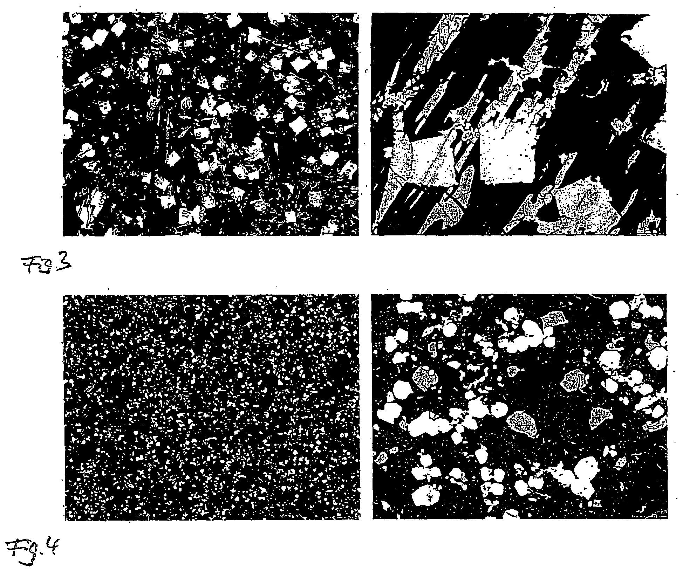

Figur 3 zeigt Schliffbilder in unterschiedlichen Vergrößerungen des Gefüges TEGOSTAR als Kokillenguss und geätzt mit H₂O+3% HNO3.
Figur 4 zeigt im Vergleich das Gefüge SnSb10Zn7Cu4CoNi als Kokillenguss geätzt mit H₂O+3% HNO3.
   Der Vergleich zeigt deutlich, dass das erfindungsgemäße Gefüge feinkörniger ist und dass die Phasen von Lamellen und eckigen Formen in gerundete Formen geändert sind.

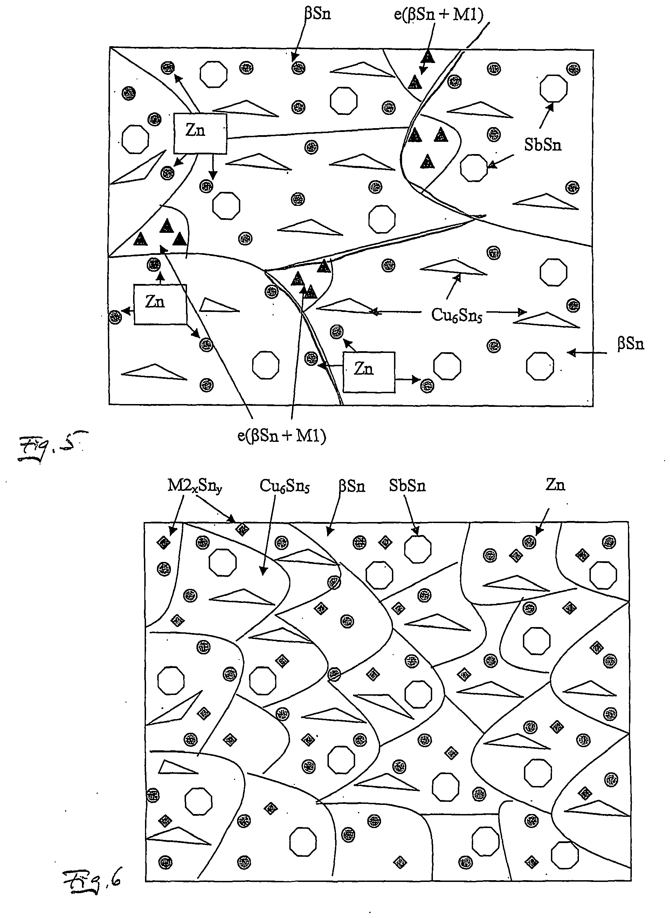

Figur 5 verdeutlicht schematisch die Gefügestruktur einer Gleitlagerlegierung nach den zweiten Aspekt der vorliegenden Erfindung. Es handelt sich um eine Legierung SnSb10Cu4Zn7M1. Es wird verdeutlicht, dass sich eutektische Gefüge-e(βSn+βSnₓM1_{y}) ausbilden und dass Phasen βSn, Cu₆Sn₅, SbSn, βSnₓM1_{y} oder M1 entstehen.
Figur 6 zeigt eine entsprechende aus Clustern gebildete Gefügestruktur bei einer Legierung SnSb10Cu4Zn7M2 der oben beschriebenen Art. Dargestellt ist das Schema der Gefüge M2ₓSn_{y}+βSn+SbSn+Cu₆Sn₅+e(βSn+αZn). Als Phasen sind αZn, βSn, Cu₆Sn₅, SbSn, M2ₓSn_{y} oder M2 verdeutlicht.

Im Folgenden werden einige Ausführungsbeispiele von erfindungsgemäßen Gleitlagerlegierungen beschrieben.

### Beispiel 1:

Eine Gleitlagerlegierung wird in üblicher Weise aus 7,2 Gew.-% Zn, 10,1 Gew.-% Sb, 4,0 Gew.-% Cu, 0,6 Gew.-% Ni, 0,6 Gew.-% Co, 0,05 Gew.-% Zr und 0,1 Gew.-% Cr, 0,05 Gew.-% Fe, Rest Zinn, hergestellt. Die Gleitlagerlegierung zeigt gute technologische Eigenschaften bezüglich der Ermüdungsfestigkeit und eine Gusshärte von 35 HB, 2,5/31,5/30 sowie eine relative Zähigkeit von 309.

### Beispiel 2:

In üblicher Weise wird eine Gleitlagerlegierung aus 3,4 Gew.-% Zn, 9,1 Gew.-% Sb, 4,5 Gew.-% Cu, 1 Gew.-% Ni, 1,0 Gew.-% Co, 0,05 Gew.-% In, 0,1 Gew.-% V, 0,1 Gew.-% Cr, 0,04 Gew.-% Pb, Rest Zinn, hergestellt. Die Gleitlagerlegierung zeigte gute technologische Eigenschaften und eine Gusshärte von 32,0 HB, 2,5/31,5/30 und eine relative Zähigkeit von 502.

### Beispiel 3:

In üblicher Weise wird eine Gleitlagerlegierung aus 20,8 Gew.-% Zn, 15,1 Gew.-% Sb, 5,2 Gew.-% Cu, 0,5 Gew.-% Ni, 1,0 Gew.-% Mn, und 0,15 Gew.-% Fe, Rest Zinn, hergestellt. Die Gleitlagerlegierung zeigte gute technologische Eigenschaften und eine Gusshärte von 42,0 HB 25/31,5/30 sowie eine relative Zähigkeit von 10.

### Beispiel 4:

In üblicher Weise wird eine Gleitlagerlegierung aus 22,3 Gew.-% Zn, 5,1 Gew.-% Cu 0,5 Gew.-%, Ni, 1,2 Gew.-% Mn, Rest Zinn, hergestellt. Die Gleitlagerlegierung zeigte gute technologische Eigenschaften und eine Gusshärte von 30,0 HB 2,5/31,5/30 sowie eine relative Zähigkeit von 8. Diese Gleitlagerlegierung ist wegen des Fehlens von Antimon völlig frei von umweltbelastenden Legierungselementen. Dennoch werden erfindungsgemäß für ein Gleitlager brauchbare technische Eigenschaften erzielt.

### Beispiel 5:

In üblicher Weise wird eine Gleitlagerlegierung aus 28,2 Gew.-% Zn, 9,03 Gew.-% Sb, 4,0 Gew.-% Cu, 0,25 Gew.-% Cr, 0,3 Gew.-% Ni, 0,3 Gew.-% Co, 0,03 Gew.-% Al, Rest Zinn, hergestellt. Die Gleitlagerlegierung zeigte gute technologische Eigenschaften und eine Gusshärte von 45,0 HB 2,5/31,5/30 sowie eine relative Zähigkeit von 5.

Die gegenüber den übrigen Beispielen verschlechterten technologischen Eigenschaften verdeutlichen, dass eine Erhöhung über die Grenze von 30 Gew.-% Zn nicht mehr sinnvoll ist.

### Beispiel 6 (Vergleichsbeispiel):

Die erfindungsgemäße Gleitlagerlegierung gemäß Beispiel 1 ist in einem Radialgleitlager-Ermüdungsversuch geprüft worden. Der Versuch ist mit einer Belastungsamplitude von P quer = 39 MPa und bei ca. 95°C durchgeführt worden. Dabei hat das erfindungsgemäße Gleitlager 122,8 Mio. Lastwechsel schadenfrei, d.h. ohne Gefügerisse überstanden.

Im Vergleich mit der Gleitlagerlegierung TEGOSTAR hat sich bei dem gleichen Ermüdungsversuch eine Beschädigung in Form von Gefügerissen eingestellt.

### Beispiel 7 (Vergleichsbeispiel):

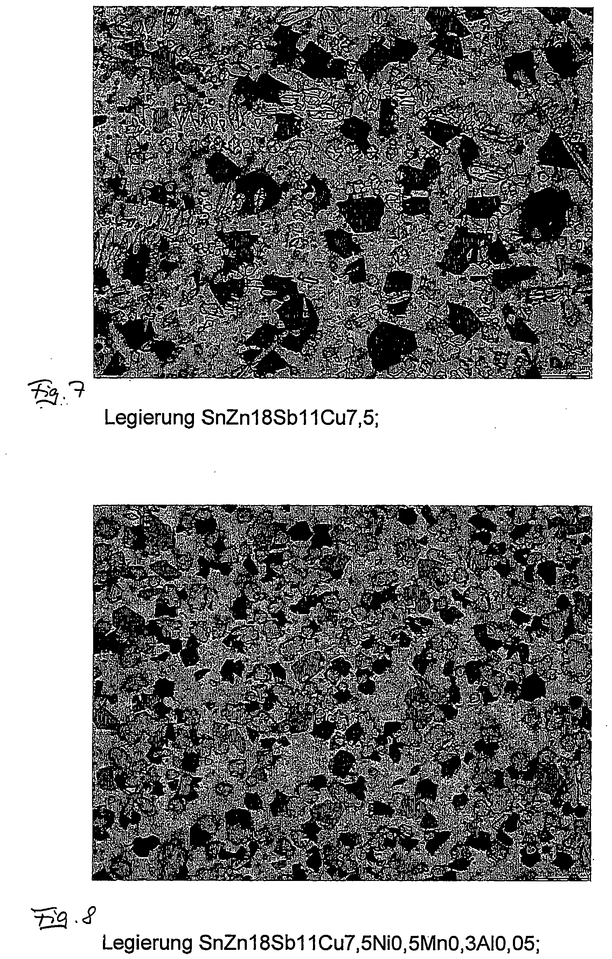

Eine Gleitlagerlegierung gemäß SU 1560596 A1 mit 18 Gew.-% Zn, 11 Gew.-% Sb und 7,5 Gew.-% Cu wurde mit den gleichen Messmethoden untersucht. Die Gusshärte betrug 42 HB 2,5/31,5/30 und die relative Zähigkeit 4. Ein Schliffbild des erhaltenen Gefüges ist in Figur 7 dargestellt.

### Beispiel 8:

Zum Vergleich mit dem Beispiel 7 wurde eine erfindungsgemäße Legierung mit 18 Gew.-% Zn, 11 Gew.-% Sb, 7,5 Gew.-% Cu durch Zusatz von 0,5 Gew.-% Ni, 0,3 Gew.-% Mn und 0,05 Gew.-% Al, Rest Zinn, hergestellt und untersucht.

Es ergab sich eine Gusshärte von 46 HB, 2,5/31,5/30 und eine relative Zähigkeit von 12.

Das in Figur 8 dargestellte Schliffbild des Gefüges gemäß diesem Beispiel zeigt im Vergleich zu Figur 7 eine deutliche Feinung und Rundung der Ausscheidungen, wodurch sich die verbesserten technologischen Eigenschaften ergeben.

Die Angaben zur relativen Zähigkeit ergeben sich aus einem Kerbschlagbiegeversuch. Dabei wird eine zylindrische Probe mit einem Durchmesser von 32 mm im Abstand von 20 mm von der unteren Stirnseite mit einer Kerbe von 2 mm versehen, die sich 12 mm tief in radialer Richtung in den Körper erstreckt. Die Probe wird unmittelbar unterhalb der Kerbe eingespannt und dann von der Seite, von der aus die Kerbe eingebracht worden ist, mit definierten Schlägen senkrecht zur Längsachse der Proben beaufschlagt. Hierbei wird ein an einem Drehgelenk aufgehängtes Gewicht um 90° ausgelenkt. Das Fallenlassen erfolgt so, dass das Gewicht seitlich auf das obere Ende der Probe trifft. Die Anzahl der Schläge bis zum Bruch der Probe wird festgestellt und als Maß für die relative Zähigkeit angegeben.

Es handelt sich somit um eine nur für die Ermittlung relativer Werte geeignete Messmethode.

## Patentansprüche

1. Gleitlagerlegierung auf Zinnbasis, geeignet zur Herstellung einer Gleitlagerbeschichtung im Gießverfahren, mit wenigstens einem Hauptlegierungselement und einem Zinnanteil von 25 bis 98 Gew.-%, **gekennzeichnet durch** die Hauptlegierungselemente
0 bis 25 Gew.-% Antimon
0 bis 20 Gew.-% Kupfer und
2 bis 30 Gew.-% Zink
und wenigstens einem Zusatzlegierungselement, ausgewählt aus einer oder mehrerer der nachstehenden Gruppen
Gruppe I:
Kobalt, Mangan, Scandium, Germanium und Aluminium mit einem Gesamtanteil von 0,001 bis 2,6 Gew.-%,
Gruppe II:
Magnesium, Nickel, Zirkon, Titan mit einem Gesamtanteil von 0,005 bis 1,7 Gew.-%,
Gruppe III:
Wismut, Indium, Cadmium und Blei mit Anteilen von jeweils maximal 5 Gew.-% und einem Gesamtanteil von maximal 8 Gew.-%,
Gruppe IV:
Lithium, Silber, Cer, Yttrium, Samarium, Gold, Tellur und Kalzium, mit einem Anteil von jeweils bis zu 2,5 Gew.-% und einem Gesamtanteil von bis zu 4 Gew.-%,
Gruppe V:
Arsen, Niob, Vanadium, Chrom, Wolfram, Eisen, Lanthan und Erbium, mit einem Anteil von jeweils höchstens 1,0 Gew.-% und einem Gesamtanteil von höchstens 2,25 Gew.-%,
Gruppe VI:
Phosphor und Bor, jeweils mit einem Anteil von maximal 0,1 Gew.-% und einem Gesamtanteil von maximal 0,2 Gew.-%,
Rest Zinn,
wobei die Legierung eutektisches Gefüge als hauptsächliches Strukturelement aufweist, ein Eutektikum aus den beiden Phasen βSn Mischkristall und αZn Mischkristall gebildet ist und die Legierung aus einem unterkühlten Zustand heraus einen metastabilen Festkörper bildet, in dem aufgrund einer ikosaedrischen Anordnung Cluster mit einer hohen Packungsdichte gebildet sind.

2. Gleitlagerlegierung nach Anspruch 1, **dadurch gekennzeichnet, dass** das Gefüge eine maximale Korngröße von bis zu 50 µm aufweist.

3. Gleitlagerlegierung nach einem der Ansprüche 1 oder 2, **dadurch gekennzeichnet, dass** das Gefüge eine maximale Korngröße von 30 µm aufweist.

4. Gleitlagerlegierung nach Anspruch 3, **dadurch gekennzeichnet, dass** das Gefüge eine maximale Korngröße von 10 µm aufweist.

5. Gleitlagerlegierung nach einem der Ansprüche 1 bis 4, bei dem der Anteil an Antimon zwischen 6 und 25 Gew.-% liegt.

6. Gleitlagerlegierung nach einem der Ansprüche 1 bis 4 oder Anspruch 5, bei dem der Anteil an Kupfer zwischen 3 und 20 Gew.-% liegt.

7. Gleitlagerlegierung nach einem der Ansprüche 1 bis 4 oder Anspruch 6, bei der kein Antimon als Hauptlegierungselement enthalten ist.

8. Gleitlagerlegierung nach einem der Ansprüche 1 bis 4, **gekennzeichnet durch** Zink als einziges Hauptlegierungselement.

9. Gleitlager mit einer Tragkonstruktion und einer darauf aufgebrachten Gleitlagerbeschichtung aus einer Gleitlagerlegierung nach einem der Ansprüche 1 bis 8.

## Claims

1. A tin-based plain bearing alloy suitable for producing a plain bearing coating in a casting process and comprising at least one principal alloying element and a tin proportion of 25 to 98% by weight, **characterized by** the principal alloying elements
0 to 25% by weight antimony,
0 to 20% by weight copper, and
2 to 30% by weight zinc,
and at least one additional alloying element selected from one or more of the following groups:
Group I:
cobalt, manganese, scandium, germanium and aluminum, with a total proportion of 0.001 to 2.6% by weight,
Group II:
magnesium, nickel, zirconium and titanium, with a total proportion of 0.005 to 1.7% by weight,
Group III:
bismuth, indium, cadmium and lead, with proportions of in each case at most 5% by weight and a total proportion of at most 8% by weight,
Group IV:
lithium, silver, cerium, yttrium, samarium, gold, tellurium and calcium, with a proportion of in each case up to 2.5% by weight and a total proportion of up to 4% by weight,
Group V:
arsenic, niobium, vanadium, chromium, tungsten, iron, lanthanum and erbium, with a proportion of in each case at most 1.0% by weight and a total proportion of at most 2.25% by weight,
Group VI:
phosphorus and boron, in each case with a proportion of at most 0.1% by weight and a total proportion of at most 0.2% by weight,
the remainder being tin,
wherein the alloy comprises an eutectic microstructure as principal structural element, an eutectic being formed from the two phases βSn solid solution and αZn solid solution and the alloy forms a metastable solid body from a super cooled state, in which clusters are formed having a high packaging density due to an icosahedral order.

2. The plain bearing according to claim 1, **characterized in that** the microstructure has a maximum grain size of up to 50 µm.

3. The plain bearing according to one of the claims 1 or 2, **characterized in that** the microstructure has a maximum grain size of 30 µm.

4. The plain bearing according to claim 3, **characterized in that** the microstructure has a maximum grain size of 10 µm.

5. The plain bearing alloy according toone of claims 1 to 4, in which the proportion of antimony is between 6 and 25% by weight.

6. The plain bearing alloy according toone of claims 1 to 4 or claim 5, in which the proportion of copper is between 3 and 20% by weight.

7. The plain bearing alloy according toone of claims 1 to 4 or claim 6, in which no antimony is present as a principal alloying element.

8. The plain bearing alloy as according toone of claims 1 to 4, **characterized by** zinc as the only principal alloying element.

9. A plain bearing having a supporting structure and a plain bearing coating which is applied thereto and consists of a plain bearing alloy as claimed in one of claims 1 to 8.

## Revendications

1. Alliage de palier lisse à base d'étain, apte à la fabrication d'un revêtement de palier lisse en fonderie, contenant au moins un élément d'alliage principal et une part d'étain de 25 à 98 % en poids,
**caractérisé par** les éléments d'alliage principaux
0 à 25 % en poids d'antimoine,
0 à 20 % en poids de cuivre, et
2 à 30 % en poids de zinc
et au moins un élément d'alliage supplémentaire choisi parmi l'un ou plusieurs des groupes suivants :
groupe I
cobalt, manganèse, scandium, germanium et aluminium ayant une part totale de 0,001 à 2,6 % en poids,
groupe II
magnésium, nickel, zirconium, titane ayant une part totale de 0,005 à 1,7 % en poids,
groupe III
bismuth, indium, cadmium et plomb ayant des parts respectives de 5 % en poids au maximum et ayant une part total de 8 % en poids au maximum,
groupe IV
lithium, argent, cérium, yttrium, samarium, or, tellure et calcium ayant une part respective allant jusqu'à 2,5 % en poids et une part totale allant jusqu'à 4 % en poids,
groupe V
arsenic, niobium, vanadium, chrome, tungstène, fer, lanthane et erbium ayant une part respective de 1,0 % en poids au maximum et une part totale de 2,25 % en poids au maximum,
groupe VI
phosphore et bore, ayant chacun une part de 0,1 % en poids au maximum et une part totale de 0,2 % en poids au maximum,
le reste étant de l'étain,
l'alliage présentant une structure eutectique à titre d'élément de structure principal, un eutectique étant formé à partir des deux phases βSn du cristal mixte et αZn du cristal mixte, et l'alliage formant à partir d'un état sous-refroidi un corps solide métastable en formant des clusters ayant une densité de compactage élevée en raison d'une disposition icosaédrique.

2. Alliage de palier lisse selon la revendication 1,
**caractérisé en ce que**
la structure présente une granulométrie maximale allant jusqu'à 50 µm.

3. Alliage de palier lisse selon l'une des revendications 1 ou 2,
**caractérisé en ce que**
la structure présente une granulométrie maximale de 30 µm.

4. Alliage de palier lisse selon la revendication 3,
**caractérisé en ce que**
la structure présente une granulométrie maximale de 10 µm.

5. Alliage de palier lisse selon l'une des revendications 1 à 3,
dans lequel
la part en antimoine est comprise entre 6 et 25 % en poids.

6. Alliage de palier lisse selon l'une des revendications 1 à 4 ou selon la revendication 5,
dans lequel
la part en cuivre est comprise entre 3 et 20 % en poids.

7. Alliage de palier lisse selon l'une des revendications 1 à 4 ou selon la revendication 6,
dans lequel
aucun antimoine n'est contenu en tant qu'élément d'alliage principal.

8. Alliage de palier lisse selon l'une des revendications 1 à 4,
**caractérisé par**
de l'étain en tant qu'unique élément d'alliage principal.

9. Palier lisse ayant une construction de support et un revêtement de palier lisse rapporté sur celle-ci et constitué d'un alliage de palier lisse selon l'une des revendications 1 à 8.
